(19) Europäisches Patentamt
European Patent Office
Office européen des brevets

(11) **EP 2 055 566 B1**

## (12) EUROPEAN PATENT SPECIFICATION

(45) Date of publication and mention
of the grant of the patent:
**12.06.2013 Bulletin 2013/24**

(21) Application number: **08019032.5**

(22) Date of filing: **30.10.2008**

(51) Int Cl.:
*B60W 20/00* (2006.01)    *B60K 1/02* (2006.01)
*B60K 6/26* (2007.10)    *B60K 6/365* (2007.10)
*B60K 6/445* (2007.10)    *B60K 6/547* (2007.10)
*F16H 3/72* (2006.01)    *B60W 30/18* (2012.01)
*B60W 10/06* (2006.01)    *B60W 10/08* (2006.01)

(54) **Method for preferential selection of mode, gear and input speed based on multiple engine state fueling costs for a hybrid powertrain system**

Verfahren zur bevorzugten Auswahl des Modus, Gangs und Eingabegeschwindigkeit basierend auf mehreren verbrennungsmotorbetriebszustandsspezifischen Kraftstoffeinspritzkosten für ein Hybridantriebsstrangsystem

Procédé de sélection préférentielle de mode, engrenage et vitesse d'entrée en fonction de plusieurs coûts d'alimentation en carburant d'un état du moteur pour un système de propulsion hybride

(84) Designated Contracting States:
**DE**

(30) Priority: **05.11.2007 US 985364 P**
**24.09.2008 US 236546**

(43) Date of publication of application:
**06.05.2009 Bulletin 2009/19**

(73) Proprietors:
• **GM Global Technology Operations LLC**
**Detroit, MI 48265-3000 (US)**
• **Daimler AG**
**70546 Stuttgart (DE)**
• **Chrysler LLC**
**Auburn Hills, MI 48326-2757 (US)**
• **Bayerische Motoren Werke Aktiengesellschaft**
**80788 München (DE)**

(72) Inventors:
• **Heap, Anthony H.**
**Ann Arbor, Michigan 48105 (US)**
• **Kim, Kee Yong**
**Ann Arbor, Michigan 48103 (US)**

(74) Representative: **Manitz, Finsterwald & Partner GbR**
**Postfach 31 02 20**
**80102 München (DE)**

(56) References cited:
**EP-A2- 1 388 450**    **EP-A2- 1 493 604**
**US-A1- 2005 000 479**    **US-A1- 2005 003 925**

**Description**

TECHNICAL FIELD

This disclosure pertains to control systems for hybrid powertrain systems. A method according to the preamble of claim 1 is known from US 2005/003925 A1.

BACKGROUND

The statements in this section merely provide background information related to the present disclosure and may not constitute prior art.

Known hybrid powertrain architectures can include multiple torque-generative devices, including internal combustion engines and non-combustion machines, e.g., electric machines, which transmit torque through a transmission device to an output member. One exemplary hybrid powertrain includes a two-mode, compound-split, electro-mechanical transmission which utilizes an input member for receiving tractive torque from a prime mover power source, preferably an internal combustion engine, and an output member. The output member can be operatively connected to a driveline for a motor vehicle for transmitting tractive torque thereto. Machines, operative as motors or generators, can generate torque inputs to the transmission independently of a torque input from the internal combustion engine. The Machines may transform vehicle kinetic energy transmitted through the vehicle driveline to energy that is storable in an energy storage device. A control system monitors various inputs from the vehicle and the operator and provides operational control of the hybrid powertrain, including controlling transmission operating range state and gear shifting, controlling the torque-generative devices, and regulating the power interchange among the energy storage device and the machines to manage outputs of the transmission, including torque and rotational speed.

SUMMARY

A method for controlling a hybrid powertrain system including an engine selectively operative in one of an all-cylinder state and a cylinder deactivation state based upon power costs includes determining engine power costs for each operating range state of the transmission, determining a system power cost, selecting a preferred cost and corresponding engine operating points, selecting a preferred operating range state, selecting the engine state, and controlling the engine based upon the selected operating range state, the selected engine state, and the engine operating points.

BRIEF DESCRIPTION OF THE DRAWINGS

One or more embodiments will now be described, by way of example, with reference to the accompanying drawings, in which:

Fig. 1 is a schematic diagram of an exemplary hybrid powertrain, in accordance with the present disclosure;

Fig. 2 is a schematic diagram of an exemplary architecture for a control system and hybrid powertrain, in accordance with the present disclosure;

Figs. 3 - 8 are schematic flow diagrams of a control scheme, in accordance with the present disclosure;

Fig. 9 is a schematic power flow diagram, in accordance with the present disclosure;

Fig. 10 is a data graph, in accordance with the present disclosure; and

Fig. 11 is a schematic flow diagram of a control scheme, in accordance with the present disclosure.

DETAILED DESCRIPTION

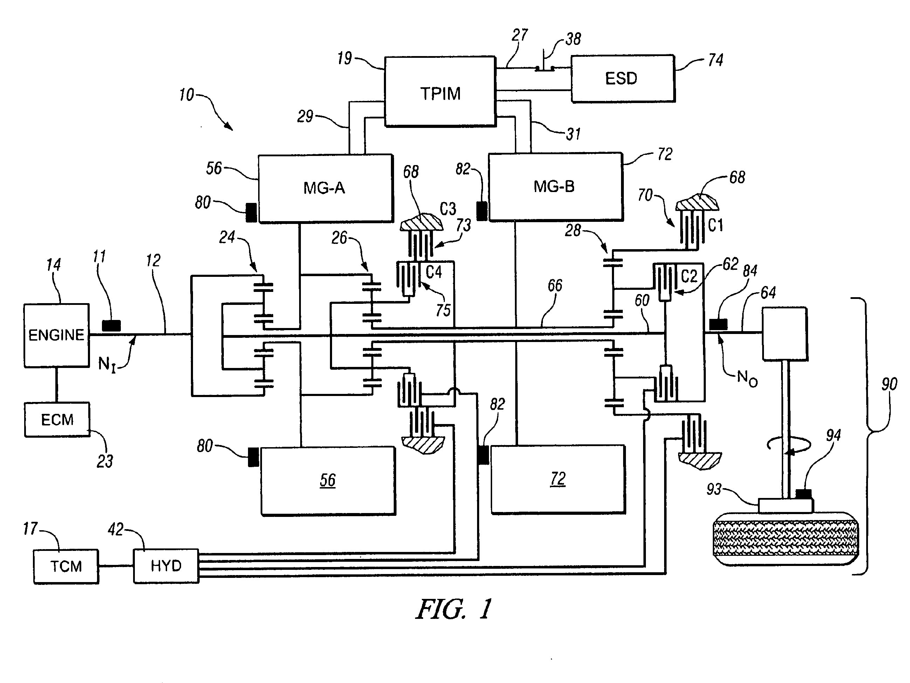

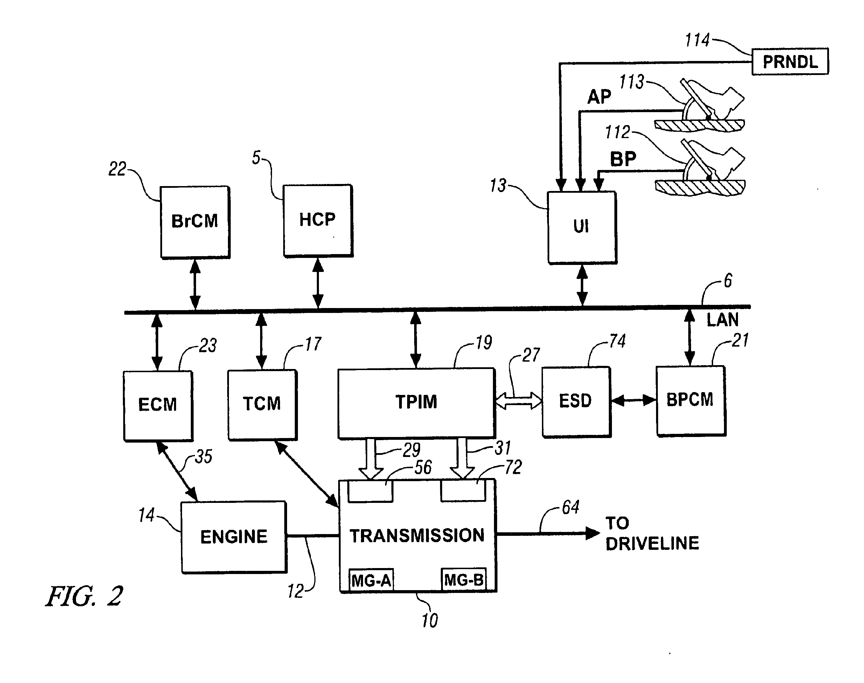

Referring now to the drawings, wherein the showings are for the purpose of illustrating certain exemplary embodiments only and not for the purpose of limiting the same, Figs. 1 and 2 depict an exemplary electro-mechanical hybrid powertrain system. The exemplary electro-mechanical hybrid powertrain system in accordance with the present disclosure is depicted in Fig. 1, comprising a two-mode, compound-split, electro-mechanical hybrid transmission 10 operatively connected to an engine 14 and torque generating machines comprising first and second electric machines ('MG-A') 56 and ('MG-B') 72. The engine 14 and first and second electric machines 56 and 72 each generate mechanical power which can be transferred to the transmission 10. The power generated by the engine 14 and the first and second electric machines 56 and 72 and transferred to the transmission 10 is described in terms of input and motor torques, referred to herein as $T_I$, $T_A$, and $T_B$ respectively, and speed, referred to herein as $N_I$, $N_A$, and $N_B$, respectively.

The exemplary engine 14 comprises a multi-cylinder internal combustion engine selectively operative in several states to transfer torque to the transmission 10 via an input shaft 12, and can be either a spark-ignition or a compression-ignition engine. The engine 14 includes a crankshaft (not shown) operatively coupled to the input shaft 12 of the transmission 10. A rotational speed sensor 11 monitors rotational speed of the input shaft 12. Power output from the engine 14, comprising rotational speed and engine torque, can differ from the input speed $N_I$ and the input torque $T_I$ to the transmission 10 due to placement of torque-consuming components on the input shaft 12 between the engine 14 and the transmission 10, e.g., a hydraulic pump (not shown) and/or a torque management device (not shown).

The exemplary transmission 10 comprises three planetary-gear sets 24, 26 and 28, and four selectively engageable torque-transferring devices, i.e., clutches C1 70, C2 62, C3 73, and C4 75. As used herein, clutches refer to any type of friction torque transfer device including single or compound plate clutches or packs, band clutches, and brakes, for example. A hydraulic control circuit 42, preferably controlled by a transmission control module (hereafter 'TCM') 17, is operative to control clutch states. Clutches C2 62 and C4 75 preferably comprise hydraulically-applied rotating friction clutches. Clutches C1 70 and C3 73 preferably comprise hydraulically-controlled stationary devices that can be selectively grounded to a transmission case 68. Each of the clutches C1 70, C2 62, C3 73, and C4 75 is preferably hydraulically applied, selectively receiving pressurized hydraulic fluid via the hydraulic control circuit 42.

The first and second electric machines 56 and 72 preferably comprise three-phase AC machines, each including a stator (not shown) and a rotor (not shown), and respective resolvers 80 and 82. The motor stator for each machine is grounded to an outer portion of the transmission case 68, and includes a stator core with coiled electrical windings extending therefrom. The rotor for the first electric machine 56 is supported on a hub plate gear that is operatively attached to shaft 60 via the second planetary gear set 26. The rotor for the second electric machine 72 is fixedly attached to a sleeve shaft hub 66.

Each of the resolvers 80 and 82 preferably comprises a variable reluctance device including a resolver stator (not shown) and a resolver rotor (not shown). The resolvers 80 and 82 are appropriately positioned and assembled on respective ones of the first and second electric machines 56 and 72. Stators of respective ones of the resolvers 80 and 82 are operatively connected to one of the stators for the first and second electric machines 56 and 72. The resolver rotors are operatively connected to the rotor for the corresponding first and second electric machines 56 and 72. Each of the resolvers 80 and 82 is signally and operatively connected to a transmission power inverter control module (hereafter 'TPIM') 19, and each senses and monitors rotational position of the resolver rotor relative to the resolver stator, thus monitoring rotational position of respective ones of first and second electric machines 56 and 72. Additionally, the signals output from the resolvers 80 and 82 are interpreted to provide the rotational speeds for first and second electric machines 56 and 72, i.e., $N_A$ and $N_B$, respectively.

The transmission 10 includes an output member 64, e.g. a shaft, which is operably connected to a driveline 90 for a vehicle (not shown), to provide output power to the driveline 90 that is transferred to vehicle wheels 93, one of which is shown in Fig. 1. The output power at the output member 64 is characterized in terms of an output rotational speed No and an output torque $T_O$. A transmission output speed sensor 84 monitors rotational speed and rotational direction of the output member 64. Each of the vehicle wheels 93 is preferably equipped with a friction brake 94 and a sensor (not shown) adapted to monitor wheel speed, $V_{SS-WHL}$, the output of which is monitored by a control module of a distributed control module system described with respect to Fig. 2, to determine vehicle speed, and absolute and relative wheel speeds for braking control, traction control, and vehicle acceleration management.

The input torque from the engine 14 and the motor torques from the first and second electric machines 56 and 72 ($T_I$, $T_A$, and $T_B$ respectively) are generated as a result of energy conversion from fuel or electrical potential stored in an electrical energy storage device (hereafter 'ESD') 74. The ESD 74 is high voltage DC-coupled to the TPIM 19 via DC transfer conductors 27. The transfer conductors 27 include a contactor switch 38. When the contactor switch 38 is closed, under normal operation, electric current can flow between the ESD 74 and the TPIM 19. When the contactor switch 38 is opened electric current flow between the ESD 74 and the TPIM 19 is interrupted. The TPIM 19 transmits electrical power to and from the first electric machine 56 by transfer conductors 29, and the TPIM 19 similarly transmits electrical power to and from the second electric machine 72 by transfer conductors 31 to meet the torque commands for the first and second electric machines 56 and 72 in response to the motor torque commands $T_A$ and $T_B$. Electrical current is transmitted to and from the ESD 74 in accordance with whether the ESD 74 is being charged or discharged.

The TPIM 19 includes the pair of power inverters (not shown) and respective motor control modules (not shown) configured to receive the motor torque commands and control inverter states therefrom for providing motor drive or regeneration functionality to meet the commanded motor torques $T_A$ and $T_B$. The power inverters comprise known complementary three-phase power electronics devices, and each includes a plurality of insulated gate bipolar transistors (not shown) for converting DC power from the ESD 74 to AC power for powering respective ones of the first and second electric machines 56 and 72, by switching at high frequencies. The insulated gate bipolar transistors form a switch mode power supply configured to receive control commands. There is typically one pair of insulated gate bipolar transistors for each phase of each of the three-phase electric machines. States of the insulated gate bipolar transistors are controlled to provide motor drive mechanical power generation or electric power regeneration functionality. The three-phase inverters receive or supply DC electric power via DC transfer conductors 27 and transform it to or from three-phase AC power, which is conducted to or from the first and second electric machines 56 and 72 for operation as motors or generators via transfer conductors 29 and 31 respectively.

Fig. 2 is a schematic block diagram of the distributed control module system. The elements described hereinafter comprise a subset of an overall vehicle control architecture, and provide coordinated system control of the exemplary hybrid powertrain described in Fig. 1. The distributed control module system synthesizes pertinent information and inputs, and executes algorithms to control various actuators to meet control objectives, including objectives related to fuel economy, emissions, performance, drivability, and protection of hardware, including batteries of ESD 74 and the first and second electric machines 56 and 72. The distributed control module system includes an engine control module (hereafter 'ECM') 23, the TCM 17, a battery pack control module (hereafter 'BPCM') 21, and the TPIM 19. A hybrid control module (hereafter 'HCP') 5 provides supervisory control and coordination of the ECM 23, the TCM 17, the BPCM 21, and the TPIM 19. A user interface ('UI') 13 is operatively connected to a plurality of devices through which a vehicle operator controls or directs operation of the electro-mechanical hybrid powertrain system. The devices include an accelerator pedal 113 ('AP'), an operator brake pedal 112 ('BP'), a transmission gear selector 114 ('PRNDL'), and a vehicle speed cruise control (not shown). The transmission gear selector 114 may have a discrete number of operator-selectable positions, including the rotational direction of the output member 64 to enable one of a forward and a reverse direction.

The aforementioned control modules communicate with other control modules, sensors, and actuators via a local area network (hereafter 'LAN') bus 6. The LAN bus 6 allows for structured communication of states of operating parameters and actuator command signals between the various control modules. The specific communication protocol utilized is application-specific. The LAN bus 6 and appropriate protocols provide for robust messaging and multi-control module interfacing between the aforementioned control modules, and other control modules providing functionality including e.g., antilock braking, traction control, and vehicle stability. Multiple communications buses may be used to improve communications speed and provide some level of signal redundancy and integrity. Communication between individual control modules can also be effected using a direct link, e.g., a serial peripheral interface ('SPI') bus (not shown).

The HCP 5 provides supervisory control of the hybrid powertrain, serving to coordinate operation of the ECM 23, TCM 17, TPIM 19, and BPCM 21. Based upon various input signals from the user interface 13 and the hybrid powertrain, including the ESD 74, the HCP 5 determines an operator torque request, an output torque command, an engine input torque command, clutch torque(s) for the applied torque-transfer clutches C 1 70, C2 62, C3 73, C4 75 of the transmission 10, and the motor torque commands $T_A$ and $T_B$ for the first and second electric machines 56 and 72.

The ECM 23 is operatively connected to the engine 14, and functions to acquire data from sensors and control actuators of the engine 14 over a plurality of discrete lines, shown for simplicity as an aggregate bidirectional interface cable 35. The ECM 23 receives the engine input torque command from the HCP 5. The ECM 23 determines the actual engine input torque, $T_I$, provided to the transmission 10 at that point in time based upon monitored engine speed and load, which is communicated to the HCP 5. The ECM 23 monitors input from the rotational speed sensor 11 to determine the engine input speed to the input shaft 12, which translates to the transmission input speed, $N_I$. The ECM 23 monitors inputs from sensors (not shown) to determine states of other engine operating parameters including, e.g., a manifold pressure, engine coolant temperature, ambient air temperature, and ambient pressure. The engine load can be determined, for example, from the manifold pressure, or alternatively, from monitoring operator input to the accelerator pedal 113. The ECM 23 generates and communicates command signals to control engine actuators, including, e.g., fuel injectors, ignition modules, and throttle control modules, none of which are shown.

The TCM 17 is operatively connected to the transmission 10 and monitors inputs from sensors (not shown) to determine states of transmission operating parameters. The TCM 17 generates and communicates command signals to control the transmission 10, including controlling the hydraulic circuit 42. Inputs from the TCM 17 to the HCP 5 include estimated clutch torques for each of the clutches, i.e., C1 70, C2 62, C3 73, and C4 75, and rotational output speed, $N_O$, of the output member 64. Other actuators and sensors may be used to provide additional information from the TCM 17 to the HCP 5 for control purposes. The TCM 17 monitors inputs from pressure switches (not shown) and selectively actuates pressure control solenoids (not shown) and shift solenoids (not shown) of the hydraulic circuit 42 to selectively actuate the various clutches C1 70, C2 62, C3 73, and C4 75 to achieve various transmission operating range states, as described hereinbelow.

The BPCM 21 is signally connected to sensors (not shown) to monitor the ESD 74, including states of electrical current and voltage parameters, to provide information indicative of parametric states of the batteries of the ESD 74 to the HCP 5. The parametric states of the batteries preferably include battery state-of-charge, battery voltage, battery temperature, and available battery power, referred to as a range $P_{BAT\_MIN}$ to $P_{BAT\_MAX}$.

A brake control module (hereafter 'BrCM') 22 is operatively connected to friction brakes 94 on each of the vehicle wheels 93. The BrCM 22 monitors the operator input to the brake pedal 112 and generates control signals to control the friction brakes 94 and sends a control signal to the HCP 5 to operate the first and second electric machines 56 and 72 based thereon.

Each of the control modules ECM 23, TCM 17, TPIM 19, BPCM 21, and BrCM 22 is preferably a general-purpose digital computer comprising a microprocessor or central processing unit, storage mediums comprising read only memory ('ROM'), random access memory ('RAM'), electrically programmable read only memory ('EPROM'), a high speed clock, analog to digital ('A/D') and digital to analog ('D/A') circuitry, and input/output circuitry and devices ('I/O') and appropriate signal conditioning and buffer circuitry. Each of the control modules has a set of control algorithms, comprising resident program instructions and calibrations stored in one of the storage mediums and executed to provide the respective functions of each computer. Information transfer between the control modules is preferably accomplished using the LAN bus 6 and serial peripheral interface buses. The control algorithms are executed during preset loop cycles such that each algorithm is executed at least once each loop cycle. Algorithms stored in the non-volatile memory devices are executed by one of the central processing units to monitor inputs from the sensing devices and execute control and diagnostic routines to control operation of the actuators, using preset calibrations. Loop cycles are executed at regular intervals, for example each 3.125, 6.25, 12.5, 25 and 100 milliseconds during ongoing operation of the hybrid powertrain. Alternatively, algorithms may be executed in response to the occurrence of an event.

The exemplary hybrid powertrain selectively operates in one of several states that can be described in terms of engine states comprising one of an engine-on state ('ON') and an engine-off state ('OFF'), and transmission operating range states comprising a plurality of fixed gears and continuously variable operating modes, described with reference to Table 1, below.

Table 1

| Description | Engine State | Transmission Operating Range State | Applied Clutches |
|---|---|---|---|
| M1_Eng_Off | OFF | EVT Mode 1 | C1 70 |
| M1_Eng_On | ON | EVT Mode 1 | C1 70 |
| G1 | ON | Fixed Gear Ratio 1 | C1 70 C4 75 |
| G2 | ON | Fixed Gear Ratio 2 | C1 70 C2 62 |
| M2_Eng_Off | OFF | EVT Mode 2 | C2 62 |
| M2_Eng_On | ON | EVT Mode 2 | C2 62 |
| G3 | ON | Fixed Gear Ratio 3 | C2 62 C4 75 |
| G4 | ON | Fixed Gear Ratio 4 | C2 62 C3 73 |

Each of the transmission operating range states is described in the table and indicates which of the specific clutches C 1 70, C2 62, C3 73, and C4 75 are applied for each of the operating range states. A first continuously variable mode, i.e., EVT Mode 1, or M1, is selected by applying clutch C1 70 only in order to "ground" the outer gear member of the third planetary gear set 28. The engine state can be one of ON ('M1_Eng_On') or OFF ('M1_Eng_Off'). A second continuously variable mode, i.e., EVT Mode 2, or M2, is selected by applying clutch C2 62 only to connect the shaft 60 to the carrier of the third planetary gear set 28. The engine state can be one of ON ('M2_Eng_On') or OFF ('M2_Eng_Off'). For purposes of this description, when the engine state is OFF, the engine input speed is equal to zero revolutions per minute ('RPM'), i.e., the engine crankshaft is not rotating. A fixed gear operation provides a fixed ratio operation of input-to-output speed of the transmission 10, i.e., $N_I/N_O$. A first fixed gear operation ('G1') is selected by applying clutches C1 70 and C4 75. A second fixed gear operation ('G2') is selected by applying clutches C1 70 and C2 62. A third fixed gear operation ('G3') is selected by applying clutches C2 62 and C4 75. A fourth fixed gear operation ('G4') is selected by applying clutches C2 62 and C3 73. The fixed ratio operation of input-to-output speed increases with increased fixed gear operation due to decreased gear ratios in the planetary gears 24, 26, and 28. The rotational speeds of the first and second electric machines 56 and 72, $N_A$ and $N_B$ respectively, are dependent on internal rotation of the mechanism as defined by the clutching and are proportional to the input speed measured at the input shaft 12.

In response to operator input via the accelerator pedal 113 and brake pedal 112 as captured by the user interface 13, the HCP 5 and one or more of the other control modules determine torque commands to control the torque generative devices comprising the engine 14 and the first and second electric machines 56 and 72 to meet the operator torque request at the output member 64 and transferred to the driveline 90. Based upon input signals from the user interface 13 and the hybrid powertrain including the ESD 74, the HCP 5 determines the operator torque request, a commanded output torque from the transmission 10 to the driveline 90, the input torque from the engine 14, clutch torques for the torque-transfer clutches C 1 70, C2 62, C3 73, C4 75 of the transmission 10; and the motor torques for the first and second electric machines 56 and 72, respectively, as is described hereinbelow.

Final vehicle acceleration can be affected by other factors including, e.g., road load, road grade, and vehicle mass. The engine state and the transmission operating range state are determined based upon operating characteristics of the hybrid powertrain. This includes the operator torque request communicated through the accelerator pedal 113 and brake pedal 112 to the user interface 13 as previously described. The transmission operating range state and the engine state may be predicated on a hybrid powertrain torque demand caused by a command to operate the first and second electric machines 56 and 72 in an electrical energy generating mode or in a torque generating mode. The transmission operating range state and the engine state can be determined by an optimization algorithm or routine which determines optimum system efficiency based upon operator demand for power, battery state of charge, and energy efficiencies of the engine 14 and the first and second electric machines 56 and 72. The control system manages torque inputs from the engine 14 and the first and second electric machines 56 and 72 based upon an outcome of the executed optimization routine, and system efficiencies are optimized thereby, to manage fuel economy and battery charging. Furthermore, operation can be determined based upon a fault in a component or system. The HCP 5 monitors the torque-generative devices, and determines the power output from the transmission 10 at output member 64 that is required to meet the operator torque request while meeting other powertrain operating demands, e.g., charging the ESD 74. As should be apparent from the description above, the ESD 74 and the first and second electric machines 56 and 72 are electrically-operatively coupled for power flow therebetween. Furthermore, the engine 14, the first and second electric machines 56 and 72, and the electro-mechanical transmission 10 are mechanically-operatively coupled to transfer power therebetween to generate a power flow to the output member 64.

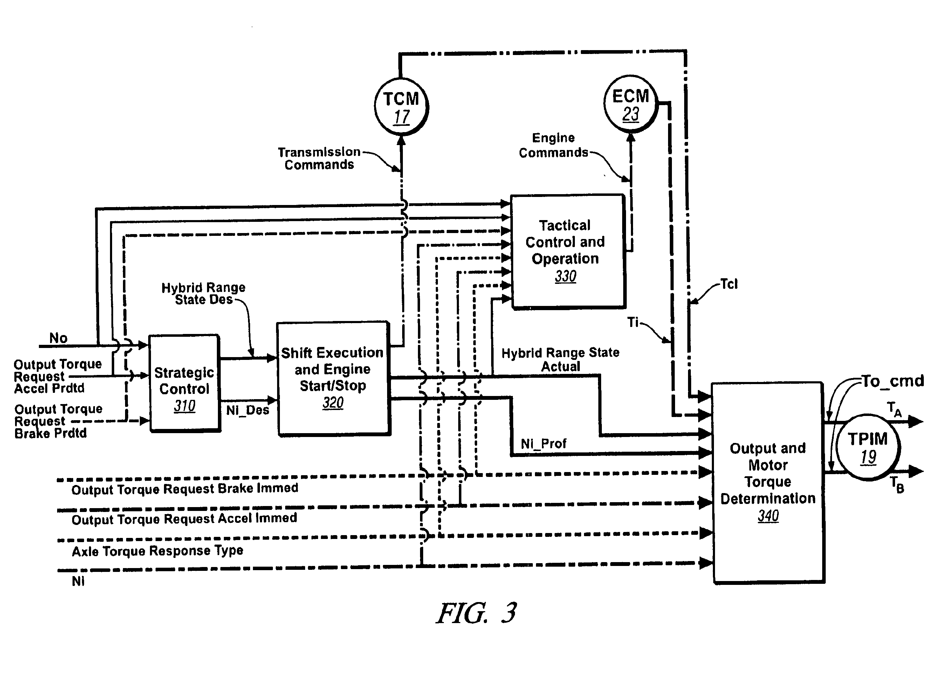

Fig. 3 shows a control system architecture for controlling and managing signal flow in a hybrid powertrain system having multiple torque generative devices, described hereinbelow with reference to the hybrid powertrain system of Figs. 1 and 2, and residing in the aforementioned control modules in the form of executable algorithms and calibrations. The control system architecture is applicable to alternative hybrid powertrain systems having multiple torque generative devices, including, e.g., a hybrid powertrain system having an engine and a single electric machine, a hybrid powertrain system having an engine and multiple electric machines. Alternatively, the hybrid powertrain system can utilize non-electric torque-generative machines and energy storage systems, e.g., hydraulic-mechanical hybrid transmissions (not shown).

In operation, the operator inputs to the accelerator pedal 113 and the brake pedal 112 are monitored to determine the operator torque request. The operator inputs to the accelerator pedal 113 and the brake pedal 112 comprise individually determinable operator torque request inputs including an immediate accelerator output torque request ('Output Torque Request Accel Immed'), a predicted accelerator output torque request ('Output Torque Request Accel Prdtd'), an immediate brake output torque request ('Output Torque Request Brake Immed'), a predicted brake output torque request ('Output Torque Request Brake Prdtd') and an axle torque response type ('Axle Torque Response Type'). As used herein, the term 'accelerator' refers to an operator request for forward propulsion preferably resulting in increasing vehicle speed over the present vehicle speed, when the operator selected position of the transmission gear selector 114 commands operation of the vehicle in the forward direction. The terms 'deceleration' and 'brake' refer to an operator request preferably resulting in decreasing vehicle speed from the present vehicle speed. The immediate accelerator output torque request, the predicted accelerator output torque request, the immediate brake output torque request, the predicted brake output torque request, and the axle torque response type are individual inputs to the control system. Additionally, operation of the engine 14 and the transmission 10 are monitored to determine the input speed ('Ni') and the output speed ('No'). The immediate accelerator output torque request is determined based upon a presently occurring operator input to the accelerator pedal 113, and comprises a request to generate an immediate output torque at the output member 64 preferably to accelerate the vehicle. The predicted accelerator output torque request is determined based upon the operator input to the accelerator pedal 113 and comprises an optimum or preferred output torque at the output member 64. The predicted accelerator output torque request is preferably equal to the immediate accelerator output torque request during normal operating conditions, e.g., when any one of antilock braking, traction control, or vehicle stability is not being commanded. When any one of antilock braking, traction control or vehicle stability is being commanded the predicted accelerator output torque request remains the preferred output torque with the immediate accelerator output torque request being decreased in response to output torque commands related to the antilock braking, traction control, or vehicle stability control.

The immediate brake output torque request is determined based upon a presently occurring operator input to the brake pedal 112, and comprises a request to generate an immediate output torque at the output member 64 to effect a reactive torque with the driveline 90 which preferably decelerates the vehicle. The predicted brake output torque request comprises an optimum or preferred brake output torque at the output member 64 in response to an operator input to the brake pedal 112 subject to a maximum brake output torque generated at the output member 64 allowable regardless of the operator input to the brake pedal 112. In one embodiment the maximum brake output torque generated at the output member 64 is limited to -0.2g. The predicted brake output torque request can be phased out to zero when vehicle speed approaches zero regardless of the operator input to the brake pedal 112. When commanded by the operator, there can be operating conditions under which the predicted brake output torque request is set to zero, e.g., when the operator setting to the transmission gear selector 114 is set to a reverse gear, and when a transfer case (not shown) is set to a four-wheel drive low range.

A strategic control scheme ('Strategic Control') 310 determines a preferred input speed ('Ni_Des') and a preferred engine state and transmission operating range state ('Hybrid Range State Des') based upon the output speed and the operator torque request and based upon other operating parameters of the hybrid powertrain, including battery power limits and response limits of the engine 14, the transmission 10, and the first and second electric machines 56 and 72. The predicted accelerator output torque request and the predicted brake output torque request are input to the strategic control scheme 310. The strategic control scheme 310 is preferably executed by the HCP 5 during each 100 ms loop cycle and each 25 ms loop cycle. The desired operating range state for the transmission 10 and the desired input speed from the engine 14 to the transmission 10 are inputs to the shift execution and engine start/stop control scheme 320.

The shift execution and engine start/stop control scheme 320 commands changes in the transmission operation ('Transmission Commands') including changing the operating range state based upon the inputs and operation of the powertrain system. This includes commanding execution of a change in the transmission operating range state if the preferred operating range state is different from the present operating range state by commanding changes in application of one or more of the clutches C 1 70, C2 62, C3 73, and C4 75 and other transmission commands. The present operating range state ('Hybrid Range State Actual') and an input speed profile ('Ni_Prof') can be determined. The input speed profile is an estimate of an upcoming input speed and preferably comprises a scalar parametric value that is a targeted input speed for the forthcoming loop cycle. The engine operating commands and the operator torque request are based upon the input speed profile during a transition in the operating range state of the transmission.

A tactical control scheme ('Tactical Control and Operation') 330 is executed during one of the control loop cycles to determine engine commands ('Engine Commands') for operating the engine 14, including a preferred input torque from the engine 14 to the transmission 10 based upon the output speed, the input speed, and the operator torque request comprising the immediate accelerator output torque request, the predicted accelerator output torque request, the immediate brake output torque request, the predicted brake output torque request, the axle torque response type, and the present operating range state for the transmission. The engine commands also include engine states including one of an all-cylinder operating state and a cylinder deactivation operating state wherein a portion of the engine cylinders are deactivated and unfueled, and engine states including one of a fueled state and a fuel cutoff state. An engine command comprising the preferred input torque of the engine 14 and the present input torque ('Ti') reacting between the engine 14 and the input member 12 are preferably determined in the ECM 23. Clutch torques ('Tcl') for each of the clutches C1 70, C2 62, C3 73, and C4 75, including the presently applied clutches and the non-applied clutches are estimated, preferably in the TCM 17.

An output and motor torque determination scheme ('Output and Motor Torque Determination') 340 is executed to determine the preferred output torque from the powertrain ('To_cmd'). This includes determining motor torque commands ('$T_A$', '$T_B$') to transfer a net commanded output torque to the output member 64 of the transmission 10 that meets the operator torque request, by controlling the first and second electric machines 56 and 72 in this embodiment. The immediate accelerator output torque request, the immediate brake output torque request, the present input torque from the engine 14 and the estimated applied clutch torque(s), the present operating range state of the transmission 10, the input speed, the input speed profile, and the axle torque response type are inputs. The output and motor torque determination scheme 340 executes to determine the motor torque commands during each iteration of one of the loop cycles. The output and motor torque determination scheme 340 includes algorithmic code which is regularly executed during the 6.25 ms and 12.5 ms loop cycles to determine the preferred motor torque commands.

The hybrid powertrain is controlled to transfer the output torque to the output member 64 to react with the driveline 90 to generate tractive torque at wheel(s) 93 to forwardly propel the vehicle in response to the operator input to the accelerator pedal 113 when the operator selected position of the transmission gear selector 114 commands operation of the vehicle in the forward direction. Similarly, the hybrid powertrain is controlled to transfer the output torque to the output member 64 to react with the driveline 90 to generate tractive torque at wheel(s) 93 to propel the vehicle in a reverse direction in response to the operator input to the accelerator pedal 113 when the operator selected position of the transmission gear selector 114 commands operation of the vehicle in the reverse direction. Preferably, propelling the vehicle results in vehicle acceleration so long as the output torque is sufficient to overcome external loads on the vehicle, e.g., due to road grade, aerodynamic loads, and other loads.

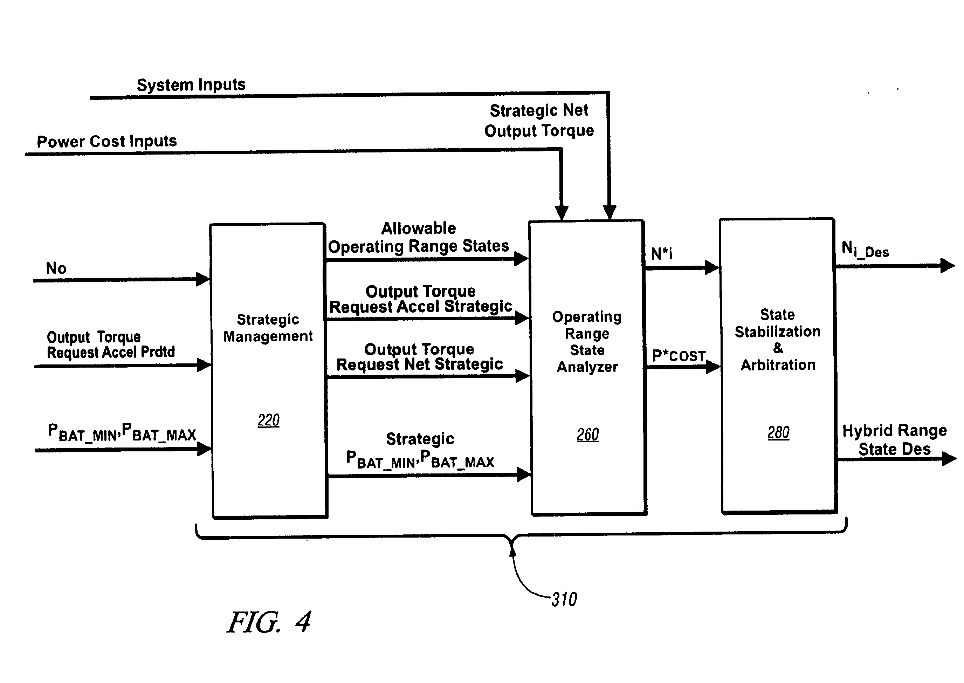

Fig. 4 details signal flow in the strategic optimization control scheme 310, which includes a strategic manager 220, an operating range state analyzer 260, and a state stabilization and arbitration block 280 to determine the preferred input speed ('Ni_Des') and the preferred transmission operating range state ('Hybrid Range State Des'). The strategic manager ('Strategic Manager') 220 monitors the output speed No, the predicted accelerator output torque request ('Output Torque Request Accel Prdtd'), and available battery power $P_{BAT\_MIN}$ to $P_{BAT\_MAX}$. The strategic manager 220 determines which of the transmission operating range states are allowable, and determines output torque requests comprising a strategic accelerator output torque request ('Output Torque Request Accel Strategic') and a strategic net output torque request ('Output Torque Request Net Strategic'), all of which are input the operating range state analyzer 260 along with system inputs ('System Inputs') and power cost inputs ('Power Cost Inputs'). The operating range state analyzer 260 generates a preferred power cost ('P*cost') and associated input speed ('N*i') for each of the allowable operating range states based upon the operator torque requests, the system inputs, the available battery power and the power cost inputs. The preferred power costs and associated input speeds for the allowable operating range states are input to the state stabilization and arbitration block 280 which selects the preferred operating range state and preferred input speed based thereon.

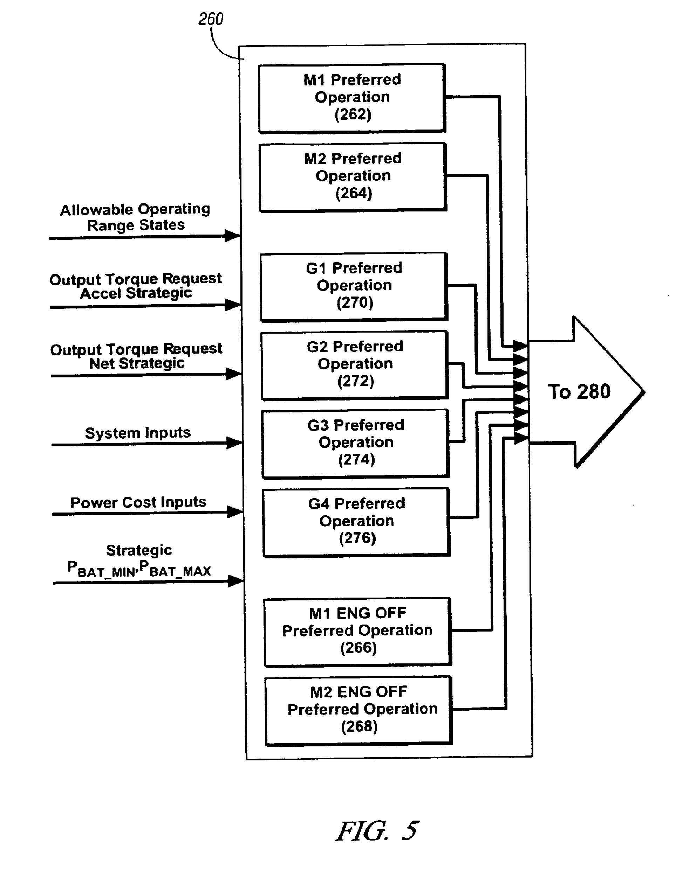

Fig. 5 shows the operating range state analyzer 260. The operating range state analyzer 260 executes searches in each candidate operating range state comprising the allowable ones of the operating range states, including M1 (262), M2 (264), G1 (270), G2 (272), G3 (274), and G4 (276) to determine preferred operation of the torque actuators, i.e., the engine 14 and the first and second electric machines 56 and 72 in this embodiment. The preferred operation preferably comprises a minimum power cost for operating the hybrid powertrain system and an associated engine input for operating in the candidate operating range state in response to the operator torque request. The associated engine input comprises at least one of a preferred engine input speed ('Ni*'), a preferred engine input power ('Pi*'), and a preferred engine input torque ('Ti*') that is responsive to and preferably meets the operator torque request. The operating range state analyzer 260 evaluates M1-Engine Off (264) and M2-Engine Off (266) to determine a preferred cost ('P*cost') for operating the powertrain system responsive to and preferably meeting the operator torque request when the engine 14 is in the engine-off state.

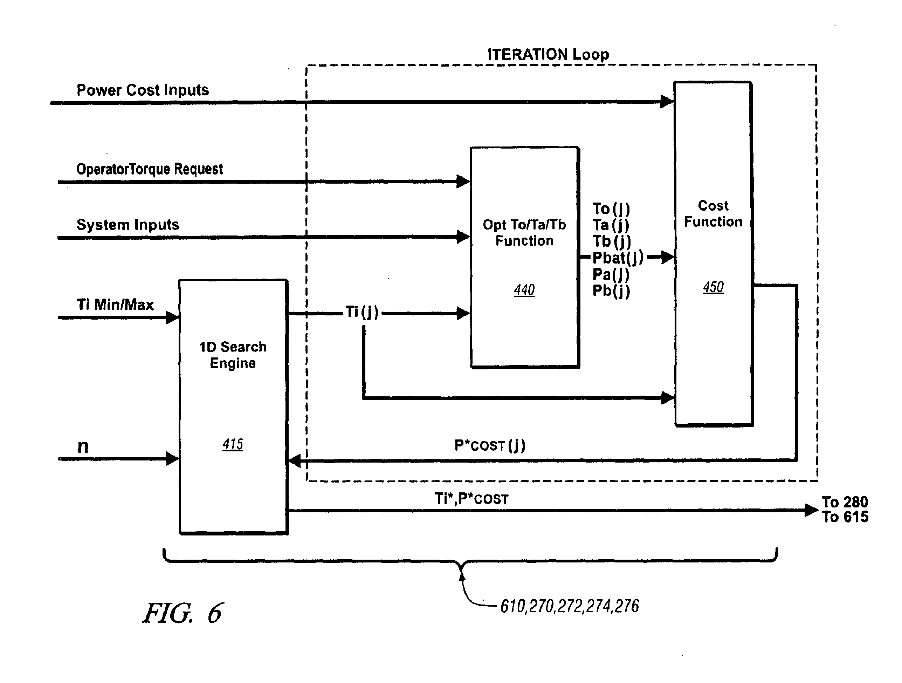

Fig. 6 schematically shows signal flow for the 1-dimension search scheme 610. A range of one controllable input, in this embodiment comprising minimum and maximum input torques ('TiMin/Max'), is input to a 1-D search engine 415. The 1-D search engine 415 iteratively generates candidate input torques ('Ti(j)') which range between the minimum and maximum input torques, each which is input to an optimization function ('Opt To/Ta/Tb') 440, for n search iterations. Other inputs to the optimization function 440 include system inputs preferably comprise parametric states for battery power, clutch torques, electric motor operation, transmission and engine operation, the specific operating range state and the operator torque request. The optimization function 440 determines transmission operation comprising an output torque, motor torques, and associated battery powers ('To(j), Ta(j), Tb(j), Pbat(j), Pa(j), Pb(j)') associated with the candidate input torque based upon the system inputs in response to the operator torque request for the candidate operating range state. The output torque, motor torques, and associated battery powers and power cost inputs are input to a cost function 450, which executes to determine a power cost ('Pcost(j)') for operating the powertrain in the candidate operating range state at the candidate input torque in response to the operator torque request. The 1-D search engine 415 iteratively generates candidate input torques over the range of input torques and determines the power costs associated therewith to identify a preferred input torque ('Ti*') and associated preferred cost ('P*cost'). The preferred input torque ('Ti*') comprises the candidate input torque within the range of input torques that results in a minimum power cost of the candidate operating range state, i.e., the preferred cost.

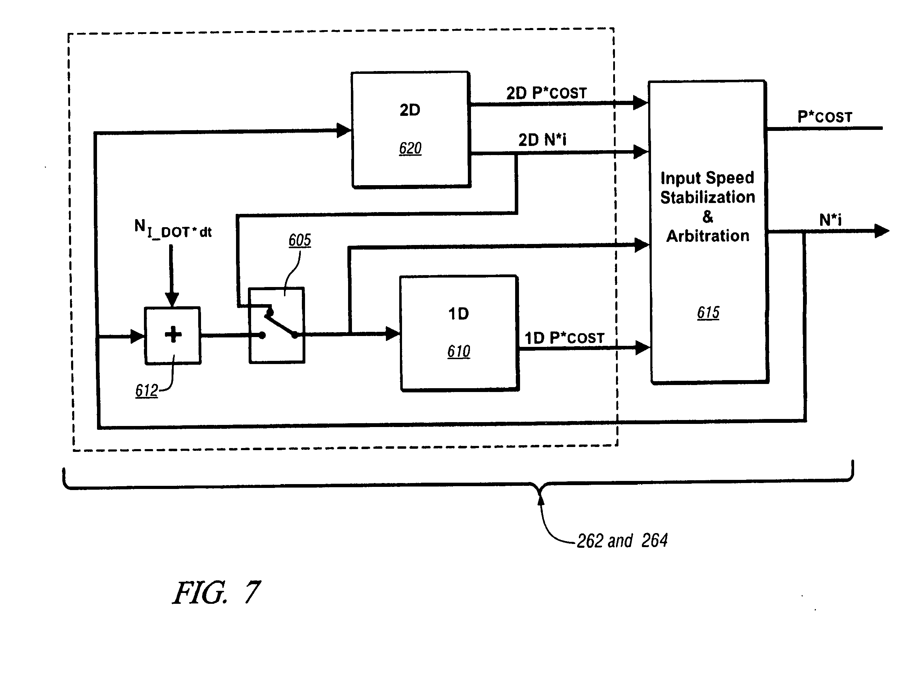

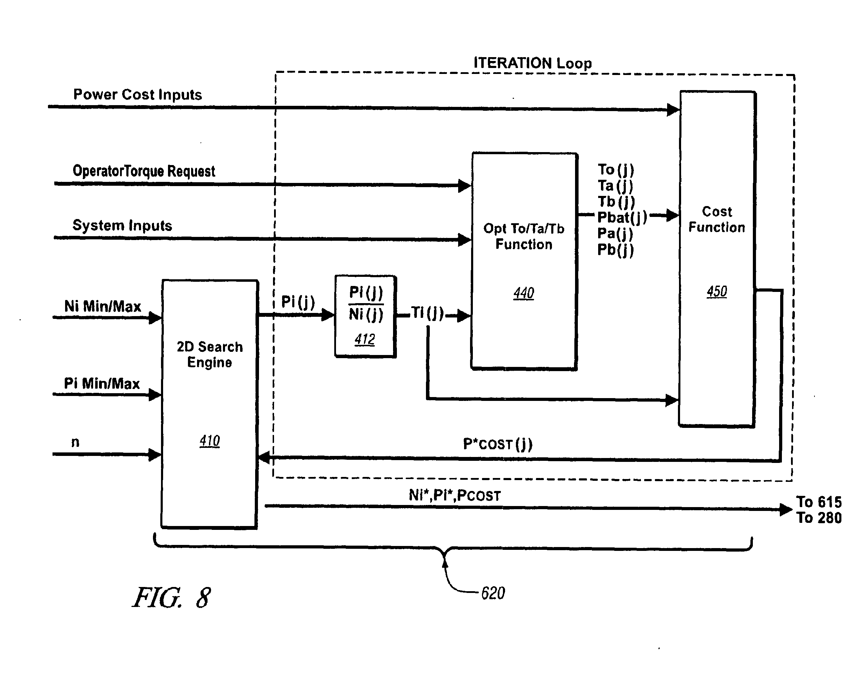

Fig. 7 shows the preferred operation in each of continuously variable modes M1 and M2 executed in blocks 262 and 264 of the operating range state analyzer 260. This includes executing a 2-dimensional search scheme 620, shown with reference to Figs. 6 and 8, in conjunction with executing a 1-dimensional search using the 1-dimensional search scheme 610 based upon a previously determined input speed which can be arbitrated ('Input Speed Stabilization and Arbitration') 615 to determine preferred costs ('P*cost') and associated preferred input speeds ('N*i') for the operating range states. As described with reference to Fig. 8, the 2-dimensional search scheme 620 determines a a first preferred cost ('2D P*cost') and an associated first preferred input speed ('2D N*I'). The first preferred input speed is input to the 2-dimensional search scheme 620 and to an adder 612. The adder 612 sums the first preferred input speed and a time-rate change in the input speed ('N$_{I\_DOT}$') multiplied by a predetermined time period ('dt'). The resultant is input to a switch 605 along with the first preferred input speed determined by the 2-dimensional search scheme 620. The switch 605 is controlled to input either the resultant from the adder 612 or the preferred input speed determined by the 2-dimensional search scheme 620 into the 1-dimensional search scheme 610. The switch 605 is controlled to input the preferred input speed determined by the 2-dimensional search scheme 620 into the 1-dimensional search scheme 610 (as shown) when the powertrain system is operating in a regenerative braking mode, e.g., when the operator torque request includes a request to generate an immediate output torque at the output member 64 to effect a reactive torque with the driveline 90 which preferably decelerates the vehicle. The switch 605 is controlled to a second position (not shown) to input the resultant from the adder 612 when the operator torque request does not include regenerative braking. The 1-dimensional search scheme 610 is executed to determine a second preferred cost ('1D P*cost') using the 1-dimensional search scheme 610, which is input to the input speed stabilization and arbitration block 615 to select a final preferred cost and associated preferred input speed.

Fig. 8 schematically shows signal flow for the 2-dimension search scheme 620. Ranges of two controllable inputs, in this embodiment comprising minimum and maximum input speeds ('NiMin/Max') and minimum and maximum input powers ('PiMin/Max'), are input to a 2-D search engine 410. In another embodiment, the two controllable inputs can comprise minimum and maximum input speeds and minimum and maximum input torques. The 2-D search engine 410 iteratively generates candidate input speeds ('Ni(j)') and candidate input powers ('Pi(j)') which range between the minimum and maximum input speeds and powers. The candidate input power is preferably converted to a candidate input torque ('Ti(j)') (412). Each candidate input speed ('Ni(j)') and candidate input torque ('Ti(j)') are input to an optimization function ('Opt To/Ta/Tb') 440, for n search iterations. Other inputs to the optimization function 440 include system inputs preferably comprising parametric states for battery power, clutch torques, electric motor operation, transmission and engine operation, the specific operating range state and the operator torque request. The optimization function 440 determines transmission operation comprising an output torque, motor torques, and associated battery powers ('To(j), Ta(j), Tb(j), Pbat(j), Pa(j), Pb(j)') associated with the candidate input power and candidate input speed based upon the system inputs and the operating torque request for the candidate operating range state. The output torque, motor torques, and associated battery powers and power cost inputs are input to a cost function 450, which executes to determine a power cost ('Pcost(j)') for operating the powertrain at the candidate input power and candidate input speed in response to the operator torque request in the candidate operating range state. The 2-D search engine 410 iteratively generates the candidate input powers and candidate input speeds over the range of input speeds and range of input powers and determines the power costs associated therewith to identify a preferred input power ('P*') and preferred input speed ('Ni*') and associated preferred cost ('P*cost'). The preferred input power ('P*') and preferred input speed ('N*') comprises the candidate input power and candidate input speed that result in a minimum power cost for the candidate operating range state.

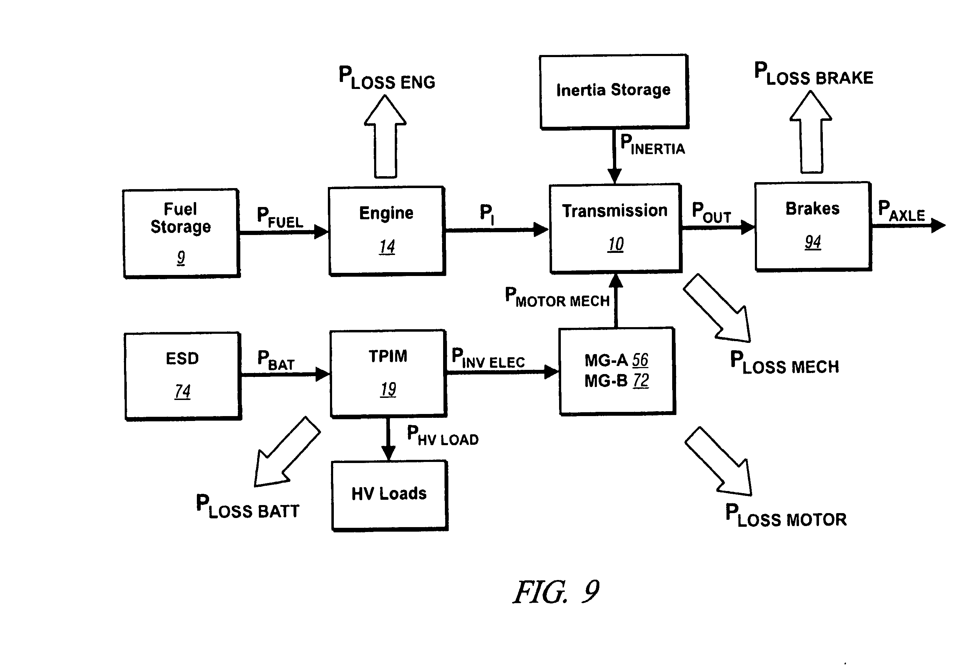

Fig. 9 schematically shows power flow and power losses through hybrid powertrain system, in context of the exemplary powertrain system described above. There is a first power flow path from a fuel storage system 9 which transfers fuel power ('$P_{FUEL}$') to the engine 14 which transfers input power ('$P_I$') to the transmission 10. The power loss in the first flow path comprises engine power losses ('$P_{LOSS\ ENG}$'). There is a second power flow path which transfers electric power ('$P_{BATT}$') from the ESD 74 to the TPIM 19 which transfers electric power ('$P_{IN\ ELEC}$') to the first and second electric machines 56 and 72 which transfer motor power ('$P_{MOTOR\ MECH}$') to the transmission 10. The power losses in the second power flow path include battery power losses ('$P_{LOSS\ BATT}$') and electric motor power losses ('$P_{LOSS\ MOTOR}$'). The TPIM 19 has an electric power load ('$P_{HV\ LOAD}$') that services electric loads in the system ('HV Loads'), which can include a low voltage battery storage system (not shown). The transmission 10 has a mechanical inertia power load input ('$P_{INERTIA}$') in the system ('Inertia Storage') that preferably include inertias from the engine 14 and the transmission 10. The transmission 10 has a mechanical power losses ('$P_{LOSS\ MECH}$') and power output ('$P_{OUT}$') which can be affected by brake power losses ('$P_{LOSS\ BRAKE}$') when being transferred to the driveline in the form of axle power ('$P_{AXLE}$').

The power cost inputs to the cost function 450 are determined based upon factors related to vehicle driveability, fuel economy, emissions, and battery usage. Power costs are assigned and associated with fuel and electrical power consumption and are associated with specific operating points of the hybrid powertrain. Lower operating costs can be associated with lower fuel consumption at high conversion efficiencies, lower battery power usage, and lower emissions for each engine speed/load operating point, and take into account the candidate operating state of the engine 14. As described hereinabove, the power costs may include the engine power losses ('$P_{LOSS\ ENG}$'), electric motor power losses ($P_{LOSS\ MOTOR}$'), battery power losses ('$P_{LOSS\ BATT}$'), brake power losses ('$P_{LOSS}$ BRAKE'), and mechanical power losses ('$P_{LOSS\ MECH}$') associated with operating the hybrid powertrain at a specific operating point which includes input speed, motor speeds, input torque, motor torques, a transmission operating range state and an engine state.

A preferred operating cost ($P_{COST}$) can be determined by calculating a total powertrain system power loss $P_{LOSS\ TOTAL}$ and a corresponding cost penalty. The total system power loss $P_{LOSS\ TOTAL}$ comprises all powertrain system power losses and includes the engine power losses $P_{LOSS\ ENG}$, electric motor power losses $P_{LOSS\ MOTOR}$, battery power losses $P_{LOSS\ BATT}$, brake power losses $P_{LOSS\ BRAKE}$, and mechanical power losses $P_{LOSS\ MECH}$.

The engine power loss in the engine 14 includes power losses due to fuel economy, exhaust emissions, losses in the mechanical system (e.g., gears, pumps, belts, pulleys, valves, chains), losses in the electrical system (e.g., wire impedances and switching and solenoid losses), and heat losses. The engine power loss can be determined for each operating range state based upon input speed and input torque and/or input speed and input power.

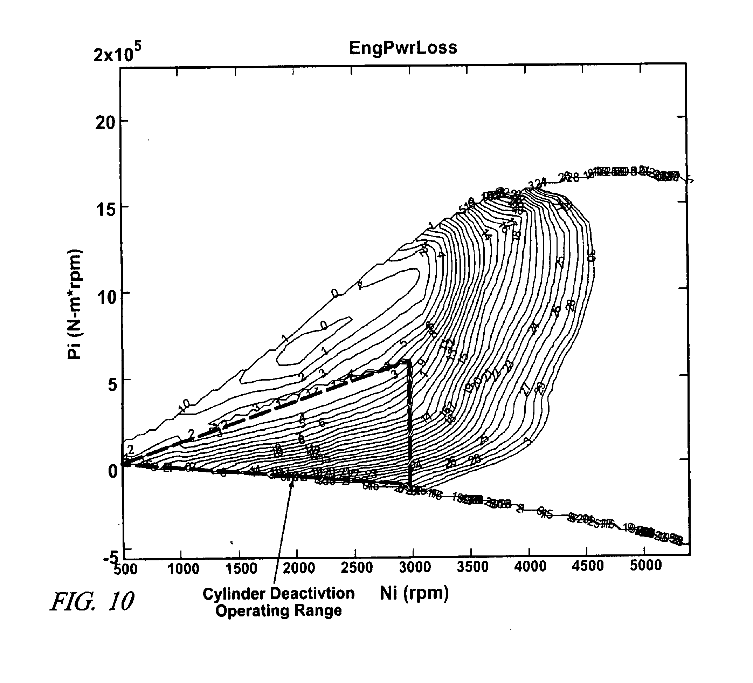

Fig. 10 graphically illustrates engine power loss values ('EngPwrLoss') plotted as a function of input speed ('Ni') and input power ('Pi') for an exemplary engine. This includes an operating range for operation in the all-cylinder operating state and a permissible operating range for operation in the cylinder deactivation operating state ('Cylinder Deactivation Operating Range') depicted in Fig. 10. The power/speed operating ranges for the all-cylinder operating state and the cylinder deactivation operating state may be predetermined based upon the engine power loss $P_{LOSS\ ENG}$ at each power/speed operating point or may be updated during ongoing operation. Alternatively, the operating range for the engine 14 may be indexed based upon input torque and the input speed. The cost function 450 determines the engine power loss $P_{LOSS\ ENC}$ for operating the engine 14 in the all-cylinder operating state and the cylinder deactivation operating state.

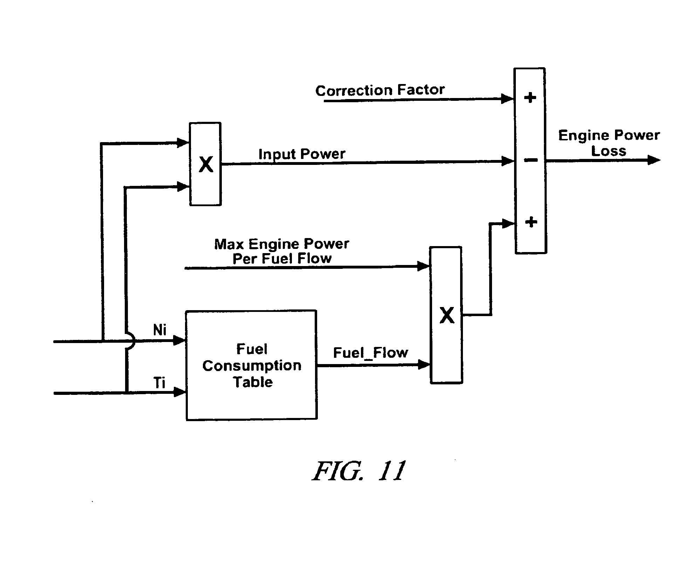

Fig. 11 shows a flow chart illustrating a process to determine the engine power loss $P_{LOSS\ ENG}$, e.g., during ongoing operation. The engine power loss $P_{LOSS\ ENG}$ is a function of a fuel economy engine power loss, actual engine input power and a correction factor. The correction factor is based upon engine operating conditions comprising, e.g., barometric pressure, coolant temperature, and emissions. The engine power loss $P_{LOSS\ ENG}$ can be determined based upon actual engine input power and in accordance with predetermined tabulated data, preferably indexed by engine operating points, e.g., engine torque and speed. The preferred method for generating engine power loss terms is through application of a loss equation as follows:

$$P_{\text{LOSS ENG}} = \eta_{\text{MAX\_fuel}} * Q_{\text{FUEL}} - P_{\text{OUT}} + CF \qquad\qquad [1]$$

wherein

$\eta_{MAX\_fuel}$ is an efficiency term describing maximum engine power output per operating fuel flow rate at a maximum fuel efficiency ('Max Engine Power Per Fuel Flow'),

$Q_{FUEL}$ is the operating fuel flow rate ('Fuel_Flow'),

$P_{OUT}$ is engine input power ('Input Power') to the transmission 10, and

*CF* is a correction factor ('Correction Factor') to account for non-standard engine operating conditions, e.g., variations and barometric pressure and coolant temperature.

Dynamometer testing may be used to establish the baseline efficiency term $\eta_{MAX\_fuel}$ and in the gathering and tabulation of the relative engine losses over a range of engine torque and speed combinations. The engine power loss $P_{\text{LOSS ENG}}$ is computed as shown above by subtracting the actual engine input power $P_{OUT}$ from the maximum engine power at the maximum fuel efficiency at the operating fuel flow rate $Q_{FUEL}$ and adding the correction factor *CF*. The correction factor *CF* may be stored in a predetermined calibration table in a memory device of one of the control modules, determined for a range of engine operating conditions. As engine operating conditions change the correction factor *CF* changes, reflecting the engine power loss $P_{\text{LOSS ENG}}$ at changed engine operating conditions.

The operating fuel flow rate $Q_{FUEL}$ is determined based upon the engine state, i.e., the all-cylinder operating state or the cylinder deactivation operating state. The preferred engine state is determined based upon a desired engine operating point relative to the power/speed operating ranges for the all-cylinder operating state and the cylinder deactivation operating state, e.g., as shown in Fig. 10, and enablement criteria. The enablement criteria include, e.g., the coolant temperature, engine oil temperature, presence of diagnostic faults, and hysteresis considerations. Preferably, the engine 14 operates in the cylinder deactivation operating state only when all the enablement criteria are met. When the enablement criteria not met, the engine 14 is not operated in the cylinder deactivation operating state. A predetermined fuel consumption table contains fuel flow data for each engine state and is preferably indexed by engine speed and power. When the desired engine operating point is within a cylinder deactivation operating state area the fuel consumption table returns a fuel flow rate for operating the engine 14 the cylinder deactivation operating state if the enablement criteria are met and operation in the cylinder deactivation operating state is commanded. If the enablement criteria are unmet, a fuel flow rate for operating the engine 14 in the all-cylinder operating state is used. When the desired engine operating point is within the all-cylinder operating state area and not the cylinder deactivation operating state area the fuel consumption table returns a fuel flow rate for operating the engine 14 for the all-cylinder operating state. Preferably, the all-cylinder operating state area consists of the entire speed/load operating region of the engine 14.

Thus, in fixed gear operation, i.e., in one of the fixed gear operating ranges states of G1, G2, G3 and G4 for the embodiment described herein, the power cost input comprising the engine power loss to the cost function 450 can be determined during each iteration of the 1-dimension search scheme 610 based upon each candidate input torque Ti (j). In mode operation, i.e., in one of the continuously variable mode operating ranges states of M1 and M2 for the embodiment described herein, the power cost input comprising the engine power loss to the cost function 450 can be determined during each iteration of the search scheme 620 based upon each candidate input power Pi(j) and each candidate input speed Ni(j).

The state stabilization and arbitration block 280 selects a preferred transmission operating range state ('Hybrid Range State Des') which preferably is the transmission operating range state associated with the minimum preferred cost for the allowed operating range states output from the operating range state analyzer 260, taking into account factors related to arbitrating effects of changing the operating range state on the operation of the transmission to effect stable powertrain operation. The preferred input speed ('Ni_Des') is the engine input speed associated with the preferred engine input comprising the preferred engine input speed ('Ni*'), the preferred engine input power ('Pi*'), and the preferred engine input torque ('Ti*') that is responsive to and preferably meets the operator torque request for the selected preferred operating range state.

**Claims**

1. A method for controlling operation of a powertrain including an engine (14) coupled to an input member (12) of a hybrid transmission (10) including first and second torque generating machines (56, 72) to transmit power to an output member (64), the engine (14) selectively operative in one of an all-cylinder state and a cylinder deactivation state, the method comprising:

    determining an operator torque request;

**characterized in that**
iteratively selecting candidate engine operating points;
determining an engine power cost for each candidate engine operating point;
determining torque outputs from the first and second torque generating machines (56, 72) based upon the candidate engine operating point and the operator torque request; and
determining a total powertrain system power loss for each candidate engine operating point based upon the engine power cost and the torque outputs from the first and second torque generating machines (56, 72).

2. The method of claim 1, further comprising selectively operating the engine (14) in the cylinder deactivation state when the selected candidate engine operating point is within an operating range for the cylinder deactivation state.

3. The method of claim 1, wherein the transmission selectively operative in one of a plurality of operating range states, and further comprising:

determining torque outputs from the first and second torque generating machines (56, 72) based upon the candidate engine operating point and the operator torque request for each of the plurality of operating range states; and
determining a total powertrain system power loss for each candidate engine operating point based upon the engine power cost and the torque outputs from the first and second torque generating machines (56, 72) for each of the plurality of operating range states.

4. The method of any one of the preceding claims, further comprising selecting the candidate engine operating point having a minimum total powertrain system power loss.

5. The method of claim 4, further comprising selectively operating the engine (14) in the cylinder deactivation state when the selected candidate engine operating point is within a permissible operating range for the cylinder deactivation operating state.

6. The method of claim 5, further comprising operating the transmission in the operating range state corresponding to the candidate engine operating point having a minimum total powertrain system power loss.

7. The method of claim 1, wherein the candidate engine operating point comprises engine input speed and engine input power, and/or engine input torque.

8. The method of claim 1, wherein the engine power cost comprises a difference between an actual engine input power and an engine power output at a maximum fuel efficiency at a present fuel flow rate.

**Patentansprüche**

1. Verfahren zum Steuern des Betriebs eines Antriebsstrangs, der eine Kraftmaschine (14) enthält, die mit einem Eingabeelement (12) eines Hybridgetriebes (10) gekoppelt ist, welches erste und zweite Drehmoment erzeugende Maschinen (56, 72) enthält, um Leistung an ein Ausgabeelement (64) zu übertragen, wobei die Kraftmaschine (14) selektiv in einem Zustand mit allen Zylindern oder einem Zustand mit Zylinderabschaltung betrieben werden kann, wobei das Verfahren umfasst, dass:

eine Bedienerdrehmomentanforderung bestimmt wird;
**dadurch gekennzeichnet, dass**
Kraftmaschinenarbeitspunktkandidaten iterativ gewählt werden;
Kraftmaschinenleistungskosten für jeden Kraftmaschinenarbeitspunktkandidaten bestimmt werden;
Drehmomentausgaben der ersten und zweiten Drehmoment erzeugenden Maschinen (56, 72) auf der Grundlage des Kraftmaschinenarbeitspunktkandidaten und der Bedienerdrehmomentanforderung bestimmt werden; und
ein Antriebsstrangsystem-Gesamtleistungsverlust für jeden Kraftmaschinenarbeitspunktkandidaten auf der Grundlage der Kraftmaschinenleistungskosten und der Drehmomentausgaben der ersten und zweiten Drehmoment erzeugenden Maschinen (56, 72) bestimmt wird.

2. Verfahren nach Anspruch 1,
das ferner umfasst, dass die Kraftmaschine (14) selektiv in dem Zustand mit Zylinderabschaltung betrieben wird, wenn der gewählte Kraftmaschinenarbeitspunktkandidat innerhalb eines Arbeitsbereichs des Zustands mit Zylinderabschaltung liegt.

3. Verfahren nach Anspruch 1,
wobei das Getriebe selektiv in einem von mehreren Arbeitsbereichszuständen betrieben werden kann und ferner umfassend, dass:

Drehmomentausgaben der ersten und zweiten Drehmoment erzeugenden Maschinen (56, 72) auf der Grundlage des Kraftmaschinenarbeitspunktkandidaten und der Bedienerdrehmomentanforderung für jeden der mehreren Arbeitsbereichszustände bestimmt werden; und
ein Antriebsstrangsystem-Gesamtleistungsverlust für jeden Kraftmaschinenarbeitspunktkandidaten auf der Grundlage der Kraftmaschinenleistungskosten und der Drehmomentausgaben der ersten und zweiten Drehmoment erzeugenden Maschinen (56, 72) für jeden der mehreren Arbeitsbereichszustände bestimmt wird.

4. Verfahren nach einem der vorstehenden Ansprüche, das ferner umfasst, dass der Kraftmaschinenarbeitspunktkandidat, der einen minimalen Antriebsstrangsystem-Gesamtleistungsverlust aufweist, gewählt wird.

5. Verfahren nach Anspruch 4,
das ferner umfasst, dass die Kraftmaschine (14) selektiv in dem Zustand mit Zylinderabschaltung betrieben wird, wenn der gewählte Kraftmaschinenarbeitspunktkandidat innerhalb eines zulässigen Arbeitsbereichs des Betriebszustands mit Zylinderabschaltung liegt.

6. Verfahren nach Anspruch 5,
das ferner umfasst, dass das Getriebe in dem Arbeitsbereichszustand betrieben wird, der dem Kraftmaschinenarbeitspunktkandidaten entspricht, der einen minimalen Antriebsstrangsystem-Gesamtleistungsverlust aufweist.

7. Verfahren nach Anspruch 1,
wobei der Kraftmaschinenarbeitspunktkandidat eine Kraftmaschineneingabedrehzahl und eine Kraftmaschineneingabeleistung und/oder ein Kraftmaschineneingabedrehmoment umfasst.

8. Verfahren nach Anspruch 1,
wobei die Kraftmaschinenleistungskosten eine Differenz zwischen einer tatsächlichen Kraftmaschineneingabeleistung und einer Kraftmaschinenausgabeleistung mit einem maximalen Kraftstoffwirkungsgrad bei der gegenwärtigen Kraftstoffströmungsrate umfassen.

## Revendications

1. Procédé pour commander le fonctionnement d'un train d'entraînement incluant un moteur (14) couplé à un élément d'entrée (12) d'une transmission hybride (10) incluant une première et une seconde machine de génération de couple (56, 72) pour transmettre une puissance à un élément de sortie (64), le moteur (14) étant capable de fonctionner sélectivement dans un état parmi un état de fonctionnement de tous les cylindres et un état avec cylindre (s) désactivé(s), le procédé comprenant :

une étape de détermination d'une requête de couple d'un opérateur ;
**caractérisé par**
une étape consistant à sélectionner de manière itérative des points de fonctionnement candidats du moteur ;
une étape de détermination d'un coût de puissance moteur pour chaque point de fonctionnement candidat du moteur ;
une étape de détermination de sortie de couple depuis la première et la seconde machine de génération de couple (56, 72) sur la base du point de fonctionnement candidat du moteur et de la requête de couple de l'opérateur ; et
une étape de détermination d'une perte de puissance totale du système de train d'entraînement pour chaque point de fonctionnement candidat du moteur sur la base du coût de puissance moteur et des sorties de couple depuis la première et la seconde machine de génération de couple (56, 72).

2. Procédé selon la revendication 1, comprenant en outre une étape consistant à faire sélectivement fonctionner le moteur (14) dans l'état avec cylindre(s) désactivé(s) quand le point de fonctionnement candidat sélectionné pour le moteur tombe dans une gamme de fonctionnement pour l'état avec cylindre(s) désactivé(s).

3. Procédé selon la revendication 1, dans lequel la transmission est capable de fonctionner sélectivement dans un état parmi une pluralité d'états de gamme de fonctionnement, et comprenant en outre :

une étape de détermination de sortie de couple depuis la première et la seconde machine de génération de couple (56, 72) sur la base du point de fonctionnement candidat du moteur et de la requête de couple de l'opérateur pour chacun de la pluralité d'états de gamme de fonctionnement ; et
déterminer une perte totale de puissance du système de train d'entraînement pour chaque point de fonctionnement candidat du moteur sur la base du coût de puissance moteur et des sorties de couple depuis la première et la seconde machine de génération de couple (56, 72) pour chacun de la pluralité d'états de gamme de fonctionnement.

4. Procédé selon l'une quelconque des revendications précédentes, comprenant en outre l'étape consistant à sélectionner le point de fonctionnement candidat du moteur ayant une perte de puissance totale minimum du système de train d'entraînement.

5. Procédé selon la revendication 4, comprenant en outre de faire fonctionner sélectivement le moteur (14) dans l'état avec cylindre(s) désactivé(s) quand le point de fonctionnement candidat sélectionné du moteur tombe dans une gamme de fonctionnement permissible pour l'état de fonctionnement avec cylindre(s) désactivé(s).

6. Procédé selon la revendication 5, comprenant en outre de faire fonctionner la transmission dans l'état de gamme de fonctionnement correspondant au point de fonctionnement candidat du moteur ayant une perte de puissance totale minimum du système de train d'entraînement.

7. Procédé selon la revendication 1, dans lequel le point de fonctionnement candidat du moteur comprend une vitesse d'entrée du moteur et une puissance d'entrée du moteur, et/ou un couple d'entrée du moteur.

8. Procédé selon la revendication 1, dans lequel le coût de puissance moteur comprend une différence entre une puissance d'entrée actuelle du moteur et une sortie de puissance moteur à efficacité de carburant maximum pour un débit de carburant actuel.

*FIG. 1*

FIG. 2

*FIG. 3*

System Inputs

Power Cost Inputs

Strategic Net
Output Torque

No

Output Torque
Request Accel Prdtd

$P_{BAT\_MIN}, P_{BAT\_MAX}$

Strategic
Management

220

Allowable
Operating Range States

Output Torque
Request Accel Strategic

Output Torque
Request Net Strategic

Strategic
$P_{BAT\_MIN}, P_{BAT\_MAX}$

Operating
Range
State
Analyzer

260

N*i

P*COST

State
Stabilization
&
Arbitration

280

$N_{I\_Des}$

Hybrid Range
State Des

310

FIG. 4

EP 2 055 566 B1

**FIG. 5**

FIG. 6

*FIG. 7*

FIG. 8

*FIG. 9*

EP 2 055 566 B1

**EngPwrLoss**

FIG. 10

Cylinder Deactivtion
Operating Range

Ni (rpm)

Pi (N-m*rpm)

Correction Factor

Input Power

Engine Power
Loss

Max Engine Power
Per Fuel Flow

Ni

Ti

Fuel
Consumption
Table

Fuel_Flow

*FIG. 11*

**EP 2 055 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005003925 A1